# EUROPEAN PATENT APPLICATION

(11) **EP 3 578 024 A1**
(43) Date of publication of application: **11.12.2019**
(21) Application number: 19178353.9
(22) Date of filing: 05.06.2019
(51) Int. Cl.: A01B 23/02, A01B 39/18

(54) **WEEDING MACHINE AND WEED HOLDER**

(30) Priority: 06.06.2018 NL 1042891
(71) Applicant: Lemken GmbH & Co KG, 46519 Alpen (DE)
(72) Inventor: Struik, Lauwrens, 3247CN Dirksland (NL)

(57) **Abstract**

The invention relates to a weeding machine, self-propelled or moved by an agricultural tractor used for weeding, inter alia, land and crops used for arable and horticultural purposes. More specifically, the invention relates to a holder for holding a weed tine as part of a weeding machine. The aim of the invention is to provide a weeding machine which is particularly suitable for use in row crops, flat crops, on ridge crops or on beds. According to the invention, a weeding machine of the type described above is characterized for this purpose by the fact that the weeding machine comprises a multitude of holders for each weed tine, a holder comprising a four-rod hinge mechanism, the rods together forming a quadrangle, the first of which is equipped with means of connecting that rod to the frame and the second, opposite, rod being equipped with means of holding a weed tine. An advantage of a weeding machine with such weed holders is that the weed tine of the machine is better able to follow an uneven surface, for example as a result of crops grown on ridges or beds, without the uneven surface having a significant effect on the intensity of a weed tine's action. This advantage is particularly evident when the four-rod hinge mechanism forms a parallelogram.

## Description

### Territory of the invention

The present invention relates to a weeding machine, self-propelled or moved by an agricultural tractor, used to weed land and crops used for, inter alia, arable and horticultural purposes. More specifically, the invention relates to a holder for holding a weed tooth as part of a weeding machine.

### Background to the invention

Well-known weeding machines include a main frame with a three-point linkage for coupling to the three-point linkage of an agricultural tractor and with a multitude of so-called weed fields. A weed field comprises a multitude of weed tines that are mounted in rows at right angles to the longitudinal axis of the weed machine, on the frame of the weed field. A weed tine is made of spring wire steel with a diameter usually of 8 +/- 3 mm. There is a wide variety of tines available. In a common version, the first end of the weed tine is characterized by a U-shape for mounting on the frame of a weed field. The second end may or may not have a kink. One or more windings are often fitted between the ends in order to make the spring characteristic of the weed tooth more suitable for the intended application. In working mode, the second end of the weed tooth is dragged in relation to the direction of travel.

One of the functions of the weeding machine is to crumble the top layer of the soil in order to expose germinating weed seeds to the drying effect of sun and wind, to improve the air exchange of the soil with the environment and to limit the evaporation of soil moisture. The practice is characterized by a wide variety of common conditions in terms of soil and vegetation. Conditional for a good functioning are 1) provisions for the adaptation to different circumstances and 2) the ease with which these provisions can be used.

Well-known weeding machines have facilities to monitor uneven terrain and to adjust the intensity of the work according to the conditions. Well-known weeding machines have weed fields that are linked to the main frame with a certain degree of mobility in order to be able to better follow the surface of uneven terrain. A well-known technique for tracking the terrain surface, the application of a gauge device in the form of, for example, a gauge slider or a gauge wheel. Thus EP0407896A1 shows a soil tillage machine for weed control in row crops where a tool carrier with tillage bodies is fitted with a support or gauge device in the form of a slider.

A drawback of this and similar devices is that the application of a gauge device is less suitable for situations in which it is to be processed (part of the)an area is covered with a cultivated crop, i.e. situations for which a weeding machine is precisely intended according to the present invention. In such situations, the cultivated crop will suffer from the gauge device and/or the operation of the gauge device is inadvertently affected by the crops.

Also known are weed fields of which the frame allows a certain degree of deformation.

A well-known technique to vary the intensity of the operation of weed tines is rotating the crossbeams on which the row of weed tines are mounted, which alters the tine angle of the weed tines. For example, adjustment of the intensity is necessary in relation to the hardness of the soil and/or the development stage of the cultural crop. Techniques are known in which the adaptation by weed field can be realized from the tractor cabin.

A disadvantage of weeding machines according to the state of the art is that the adjustment possibilities do not provide for an adjustment to the spatial variation of the working conditions resulting from crops grown in rows, whether flat fields, on ridges or on beds. This applies both to the provisions for adapting to uneven terrain and to the provisions for adjusting the intensity of the action of weed teeth in relation to the soil and crop.

The purpose of the present invention is to provide a weeding machine which is particularly suitable for use in row crops, whether flat, on ridges or on beds.

### Summary of the invention

According to the invention, a weeding machine of the type described above is characterized for this purpose by the fact that the weeding machine comprises a multitude of holders for each weed tine, a holder comprising a four-rod hinge mechanism, the rods together forming a quadrangle, the first of which is equipped with means of connecting that rod to the frame and the second, opposite, rod being equipped with means of holding a weed tine. An advantage of a weeding machine with such weed holders is that the weed tines of the machine are better able to follow an uneven surface, for example as a result of crops grown on backs or beds, without the uneven surface having a significant effect on the intensity of a weed tine's action. This advantage is particularly evident when the four-rod hinge mechanism forms a parallelogram.

According to the invention, it is advantageous for the setting of the weed intensity of each weed tine that the four-rod hinge mechanism contains a third rod, which is coupled with a spring to influence the rotation of the third rod in relation to the first rod and whose spring force is adjustable. The advantageous feature of this weeding machine is shown, for example, in the application in row cultures.

From the point of view of minimizing production costs, it is advantageous for the first rod to be identical to, and interchangeable with, the second rod.

The invention also relates to a single holder with the above characteristics, intended in particular as an add-on to existing weeding machines.

### Brief description of the drawings

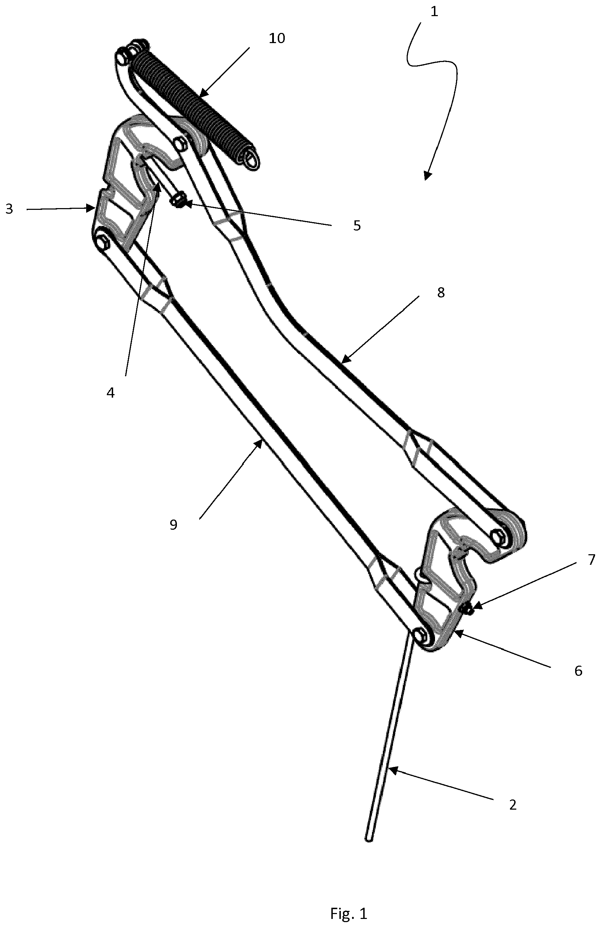

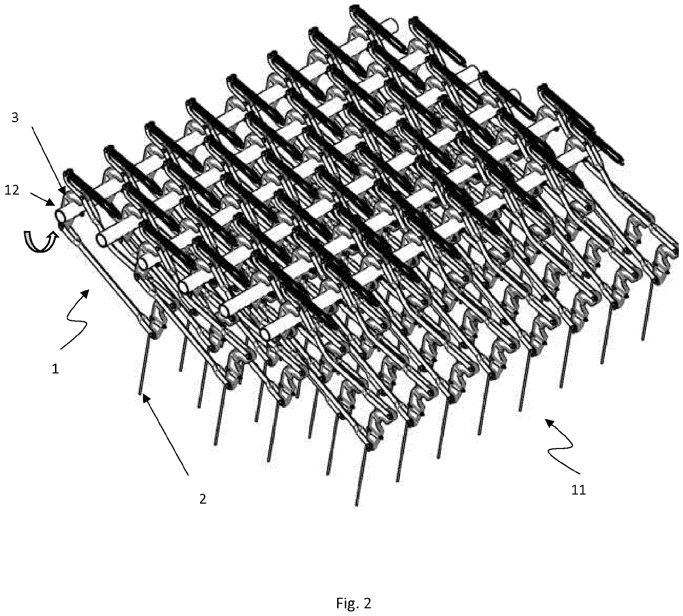

The invention is explained below by means of two figures. Figure 1 schematically shows a perspective view of a weed tine holder with a weed tine. Figure 2 shows a perspective of a multitude of weed holders with weed tines in a part of the frame of a weed machine.

### Exemplary version of a weeding machine and weed holder according to the invention

The invention will be explained in more detail below by way of example by means of one execution example, shown in the drawing, of a weed-holder 1 and a multiple of weed holders 1 in a part of a weeding-machine. Figure 1 shows an implementation example of a weed holder 1 with a mounted weed tine 2 according to the invention. The weed holder 1 comprises a four-rod hinge mechanism, i.e. a mechanism consisting of four rods that are hinged together to form a polygon in the form of a quadrangle. A first rod 3 is used to connect the weed holder 1 to the frame of the weeding machine (not shown). The first rod 3 is equipped with the means to connect weed holder 1 to the frame. In the present example, those means consist of a recess 4 to hold a part of a tube forming part of the frame and screw 5 to secure the coupling. A second rod 6 located opposite the first rod 3 is equipped with means to attach a spring tooth, for example in the form of an eyebolt 7.

In the present example, the ends of the third and fourth rods 8 and 9 are equipped with forks for a stable coupling with the ends of the first and second rods 3 and 4. To activate the weed tooth 2 in the downward direction, considered in the working position, the weed holder 1 is equipped with spring means. In the present example of implementation, these springs include a tension spring 10 which is coupled with one end to the extended end of the third bar 8. The other end is connected to the frame in an obvious way. The invention provides that the spring tension is centrally adjustable, for example by means of a pivoting axle with pitches, and also that the spring tension can be adjusted separately on each weed holder 1, for example by using a chain at one end of a tension spring and a hook on the frame.

In this example, rods 3, 6, 8 and 9 of the weed holder 1 form a parallelogram. The advantage of a parallelogram is that the angle between the weed tine 2 and the ground, when considered in working mode, is independent of the position of the parallelogram, so that the position of the parallelogram does not affect the intensity of the operation of the weed tine 2. The position of the parallelogram is defined here by the angle between the first and fourth bars 3 and 9. However, the invention also covers four-rod hinge mechanisms which do not form a parallelogram but, for example, a trapezium, the characteristic of which is that, when considered in working mode, the angle between weed tine 2 and the ground depends on the position of the holder of the binder 1.

The advantages of the weeding machine according to the invention are explained below by means of figure 2, which shows a weed field 11 with several rotatable mounted crossbeams representing the frame of the weeding machine and multipleweed holders 1, as part of a weeding machine. When cultivating a crop grown in rows, in the field or on ridges or beds, it is advantageous if the processing intensity can be adapted to the cultivation method. For the professional it is immediately clear how a difference can be made in the processing intensity of weed tines 2 working between the crop rows and weed tines 2 working on the crop rows. The same applies to weed tines 2 working on a ridge and weed tines 2 working between the ridges.

The invention relates to a weeding machine that is equipped with weed holders 1 as described above and to the weed holder 1 as an attachment for an existing weeding machine.

## Claims

1. Weeding machine for weeding agricultural and horticultural soils and crops, which includes a multitude of weed holders (1) for each holding a weed tine (2),
**characterized in that**
such a weed holder (1) includes a four-rod hinge mechanism, where the rods together form a quadrangle, where a first rod (3) is provided with means (4, 5) for connecting that rod to the frame of the weeding machine and where the opposite second rod (6) is provided with means (7) for holding a weed tooth (2).

2. Weeding machine according to claim 1,
**characterized in that**
the four-rod hinge mechanism forms a parallelogram.

3. Weeding machine according to claim 1 or 2,
**characterized in that**
the four-rod hinge mechanism includes a third rod (8), which third rod (8) is coupled with a spring to influence the twisting of the third rod (8) with respect to the first rod (3) and whose spring force is adjustable.

4. Weeding machine according to one of the claims 1 - 3,
**characterized in that** the first rod (3) is identical to the second rod (6).

5. A weed holder (1) for holding a weed tine (2),
**characterized in that**
the weed holder (1) includes a four-rod hinge mechanism, where the rods together form a quadrangle, where a first rod (3) is provided with means (4, 5) for connecting that rod to the frame (12) and where the opposite, second rod (6) is provided with means (7) for holding a weed tine (2).
